# EUROPEAN PATENT SPECIFICATION

(11) **EP 4 343 538 B1**
(45) Date of publication and mention of the grant of the patent: **08.04.2026**
(21) Application number: 22197397.7
(22) Date of filing: 23.09.2022
(51) Int. Cl.: G06F 8/30, G06F 9/448

(54) **METHOD OF PROVIDING A SOFTWARE CONFIGURATION FOR A MODULAR PLANT**
VERFAHREN ZUR BEREITSTELLUNG EINER SOFTWAREKONFIGURATION FÜR EINE MODULARE FABRIK
PROCÉDÉ DE FOURNITURE D'UNE CONFIGURATION LOGICIELLE POUR UNE INSTALLATION MODULAIRE

(43) Date of publication of application: 27.03.2024
(73) Proprietor: ABB SCHWEIZ AG, 5400 Baden (CH)
(72) Inventor: HOERNICKE, Mario, 76829 Landau (DE); GRUENER, Sten, 69514 Laudenbach (DE); STARK, Katharina, 69469 Weinheim (DE); SCHOCH, Nicolai, 69120 Heidelberg (DE); ESKANDANI, Nafise, 64380 Rossdorf (DE)
(74) Representative: Maiwald GmbH

(56) References cited:
- US-A1- 2004 015 822
- US-B2- 9 829 881

## Description

### FIELD OF THE INVENTION

The present invention relates to a method of providing a software configuration for a modular plant.

### BACKGROUND OF THE INVENTION

Modular plants are becoming more and more established due to benefits in respect to development costs and material efforts. For developing such modular plants, a standardized methodology methodology called Modular Type Package (MTP) is commonly known in the prior art. This approach creates a framework for interoperability between so-called function modules and a suitable orchestration system for developing a modular plant and technical processes inside such a modular plant, wherein technical components of a modular plant to be developed are depicted by using function modules of various types. The function module concept is evolving to develop plants in a modular fashion, but without the need of having to stick completely to the MTP standard. The EP 3937012 A1 discloses the development and usage of such function modules. The US 2015/039112 A1 refers to a supervisory process control and manufacturing information system application having an extensible component model.

However, a common problem when using the MTP approach for developing modular plants is the semantic ambiguity of the services implemented in a function module. The services, e.g. measuring of temperature, are specified by name and parameters, but the semantic meaning of it is often not known.

Furthermore, the function module concept is lacking an efficient re-use of function modules that have originally been build for a certain technical application to be used in another field of technicial application, in order to make the development of technical modular plants or technical processes for technical modular plants more efficient.

There is a need to address these issues.

### SUMMARY OF THE INVENTION

Therefore, it would be advantageous to provide an improved concept of using function modules for developing a modular plant.

The object of the present invention is solved with the subject matter of the independent claims, wherein further embodiments are incorporated in the dependent claims.

In a first aspect of the present invention, there is provided a method of providing a software configuration for a modular plant, the method comprising:
- providing a first function module as a parent object, wherein the first function module comprises a function information of the first function module;
- generating at least a second function module, wherein the second function module is a derived child object of the first function module that inherits the function information of the first function module.

In other words, the core idea behind the present invention is to develop the already known type-instance MTP approach when using function modules (FM) further. This is done in the present invention by implementing a full object-oriented approach for function modules that is based on an inheritance concept applied for function modules which are used for developing technical modular processes or technical modular plants.

Inheritance in the present invention can be used to derive previously defined functionality features from a parent function module and extend it with further (optional) functions.

However, in the present invention, it is further possible to forbid inheritance of a specific function module, by sealing said function module.

In the following, some advantageous aspects of the present invention are shortly described and further, definitions of terms used in the following are described herein to facilitate the understanding of the present invention.

According to the present invention, a so-called basic functionality or (basic) function of a derived child function module can be from another (parent) function module and the parent functionality may be changed (partly), if allowed, without having to implement another function module again.

The concept of the present invention further includes abstraction of function modules, which are known as classes in object-orientation approach, implementation and usage of semantically defined interfaces as well as the enforement and disablement of functions applied to a function module in an efficient way, so to allow usage of a function module for different or multiple technical applications in an easy way.

An interface of a function module in the present invention may be a rule or an instruction for a derived or inherited function module which functions of function features must be implemented by said dervice function module. However, an interface does not say, how a certain feature, e.g. a service or an equipment, of a parent function module is to be implemented in a derived child function module. For example, the interface may be a rule that is defined at a location or in a parent function module and the implementation of the interface occurs in another (derived) function module.

Further, said interface could be used to define a signature of a service or a usage of an equipment or a device inside a function module. Every function module implementing the interface must provide the defined services with the defined signature.

A signature of a service according to the present invention is a description of characteristic behaviour of a certain service. For instance, a service of stirring may be defined by its characteristic behaviour or input parameters such as velocity of the stirring process and the time for stirring.

A function (feature) or a functionality (feature) of a function module may also be named as a service in the present invention.

A service according to present invention can be virtual or non-virtual. When a service is marked as being virtual in a (parent) function module, it only provides information of what the service does, e.g. stirring of a liquid, but it does not say how this service is implemented. The implementation of such a virtual service has to be done by the derived child function module that inherits said virtual service. Implementation can mean providing the essential code lines for said service.

A semantic description of a function module according to the present invention provides a description of what said function module really does or the functionality of said function module.

Further, according to the present invention, the applied concept to function modules allows function modules in an advantageous manner to signalize which basic or optional functionality of a derived child function module can be changed and which functionality is not allowed to be changed. This functionality of a function module is implemented by using so-called protected services and protected equipment or devices. This means also that a protected service or a protected equipment or device can only and exclusively be used in a derived child function module in which said protected service or said protected equipment occurs, but said protected feature or protected equipment can not be used in a further instance of said derived child function module. However, a protected service or a protected equipment may be changed in said derived child function module.

In an advantegeous manner, the present invention enables an enforcement of a derived child function module for an actual implemenation. This is done by so-called abstract function modules, as described further below.

In summary, the improved concept of the present invention allows that function modules can be easily adapted for multiple usage in different fields of technical application, reducing the efforts in developing said function modules and resulting in a more cost- and time-efficient developing process when developing technical modular processes or technical modular plants using such function modules of the present invention.

According to an example, the function information of the first function module comprises at least one service defining at least a basic function of the first function module that is inherited by the derived at least second function module. Therein, the advantage achieved is an efficient handling of the function modules.

According to an example, the at least one service comprises a signature which comprises at least a characteristic property of said service. Therein, the advantage achieved is a clear definition of the service.

According to an example, the function information of the first function module further comprises at least one device used to implement said defined service. Therein the advantage achieved is that an efficient handling of the function module can be enabled.

According to an example, the first function module further implements at least an interface information only defining said service that must be implemented by the at least derived second function module. Therein the advantage achieved is the first function module can be kept as general as possible to allow multiple use in different technical fields.

According to an example, the function information in said derived second function module comprises a protected feature that allows to adjust, whether a defined basic function of a service and / or a device from the derived second function module can be used in a further instance of said derived second function module. Therein, the advantage achieved is that the derived second function module can be easily adapted for different uses.

According to an example, the at least first function module further comprises at least a conditional feature that allows activating/enforcing or disabling the usage of the device and / or service of the first function module and / or the derived second function module. Therein, the advantage achieved is that the at least first function module can be easily adapted for different uses.

According to an example, the service comprises at least one optional feature. Therein, the advantage achieved is that the functionality of the service can be easily enhanced.

According to an example, the at least second function module comprises a selection function allowing to enforce or disable the usage of the optional function of the service derived from the at least first function module. Therein, the advantage achieved is that the functionality of the at least second function module can be easily adapted for different uses.

According to an example, the at least second function module comprises a sealed feature allowing to disable inheritance of the at least second function module. Therein, the advantage achieved is to allow an easy restrictive use of the at least second function module.

According to an example, the service is a virtual-typed service meaning that the at least derived second function module must implement the at least service inherited from the parent first function module. Therein, the advantage achieved is that the first function module needs not contain detailed information about an implementation manner.

In a second aspect of present invention, there is a computer provided comprising a processor configured to perform the method of any preceding aspect.

In a third aspect of the present invention, there is provided a computer program product comprising instructions which, when the program is executed by a processor of a computer, cause the computer to perform the method of any of the first and second aspects.

### BRIEF DESCRIPTION OF THE DRAWINGS

Exemplary embodiments will be described in the following with reference to the following drawings:
Fig. 1 illustrates a schematic flow-diagramm of a method of the present invention;
Fig. 2 illustrates a schematic relationship between a parent function module and a derived child function module;
Fig. 3 illustrates a schematic inheritance of a function module;
Fig. 4 illustrates a schematic interface implementation in a function module;
Fig. 5 illustrates a schematic interface of a function module;
Fig. 6 illustrates a schematic implementation of an abstract function module;
Fig. 7 illustrates a schematic implementation of a sealed function module; and
Fig. 8 illustrates a schematic implementation of enforcing and disabling functions of a function module.

### DETAILED DESCRIPTION OF THE DRAWINGS

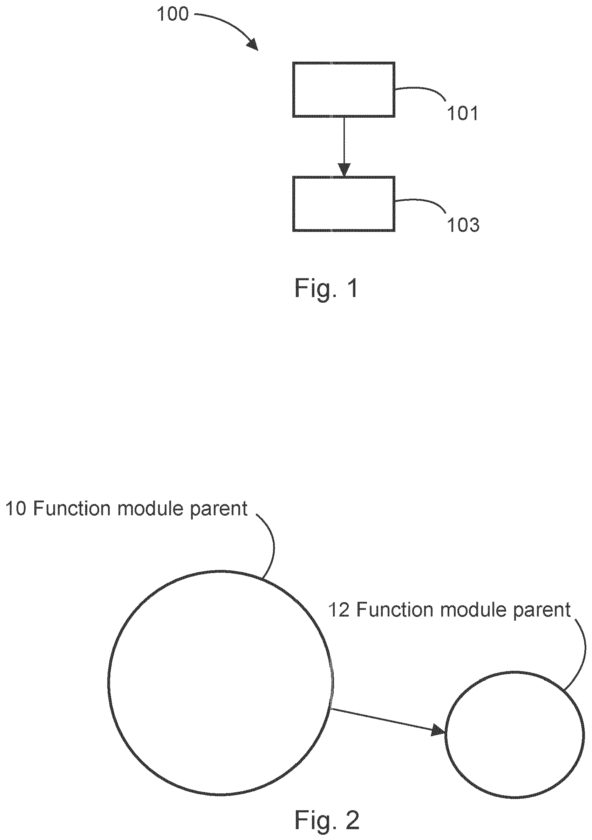

Fig. 1 illustrates a schematic flow-diagramm of a method 100 of providing a software configuration for a modular plant.

In a first step 101, a first function module 10 as a parent object is provided, wherein the first function module 10 comprises a function information of the first function module 10.

In a second step 103, at least a second function module 12 is generated, wherein the second function module 12 is a derived child object of the first function module 10 that inherits the function information of the first function module 10.

Fig. 2 illustrates a schematic relationship between a parent function module 10 and a derived child function module 12. The child second function module 12 inherits the functionality of the parent first function module 10. The functionality of the first function module 10 can be described by at least one service, at least one equipment or device. The device executes or controls the service. The service can be further defined by at least one parameter or argument.

The parent first function module 10 can have multiple functions, but it needs not to provide any information of its concrete implementation. The implementation information, meaning how a service or functionality must be implemented may be contained or placed in the derived second function module 12. Such a service is also called as a virtual service in a parent function module.

For a first example, a service of a (parent) function module may be a measuring a parameter, such a temperature of a gas, by an equipment or device as a sensor. The signature of the service would be the time of how long the measurement should be performed.

Another second example would be a stirring process in a melting pot. The stirring would be the service described in a corresponding (parent) function module. The velocity of stirring or the duration of time of stirring would correspond to the signature of said service of stirring. The corresponding equipment or device in this example would be the stirring device.

As noted before, the core idea of the present invention is to apply the concept of object-orientation to function modules that can be used and adapted for the development of a technical modular process or a technical modular plant. With this provided concept of the present invention, a function module can be easily adapted to different fields of technical application. This allows multiple und different usage of an existing or stored function module in an efficient way without the need to develop completely new function modules any time, the field of application changes.

In general, within this concept of the present invention, a function module is comparable to a class in the object-orientation approach. A service that is implemented in a function module can be compared to a method. Procedure parameter is comparable to method arguments. An equipment (or the attributes of an equipment), report values, configuration parameters, and process values (in and out) can be compared to attributes.

In the following, further details of the present invention with examples, where suitable, are presented with reference to the figures 1 and 2.

The function information of the first function module 10 comprises at least one service defining at least a basic function of the first function module 10 that is inherited by the derived at least second function module 12. For example, a basic function of a service could be heating or measuring.

In an embodiment of the present invention, the at least one service comprises a signature which comprises at least a characteristic property of said service. For example, when the basic function of a service is heating, then a signature of that service or a characteristic property could be a time duration of the heating process or a temperature as input parameter that needs to be received after a certain amount of time.

In an embodiment of the present invention, the function information of the first function module 10 further comprises at least one device used to implement said defined service. The device or the equipment is configured to control the defined service.

In an embodiment of the present invention, the first function module 10 further comprises at least an interface information only defining said service that must be implemented by the at least derived second function module 12. Therefore, an equipment in a parent first function module 10 is not always necessary. Hence, it could be also possible that the parent first function module 10 only defines a service by a signature and the derived child second function module 12 contains the information of the detailed implementation of that service. In an embodiment of the present invention, the function information in said derived second function module 12 comprises a protection feature that allows to adjust, whether a defined basic function of a service and / or a device in the derived second function module 12 can be changed. In this way, a restrictive feature to adapt the second function module 12 in an easy manner is realized.

In an embodiment of the present invention, the at least first function module 10 further comprises at least a conditional feature or functionality that allows activating/enforcing or disabling the usage of the device and / or service of the parent first function module 10 or the derived second function module 12. Therein, the advantage achieved is that the at least first function module 10 or the derived second function module 12 can be easily adapted for different uses.

In an embodiment of the present invention, the service comprises at least one optional feature. Therein, the advantage achieved is that the functionality of the service can be easily enhanced besides the basic features or basic services of a function module 10, 12. In this respect, it could be the case that the optional features or services are only described in the derived second function module 12, but not in its parent function module 10. The term "basic feature" corresponds to the term "basis service".

In an embodiment of the present invention, the at least second function module 12 comprises a selection function allowing to enforce or disable the usage of the optional function of the service derived from the at least first function module 12. Therein, the advantage achieved is that the functionality of the at least second function module 12 can be easily adapted for different uses. However, it might also be possible that this selection function can be applied to the first function module 10 as well.

In an embodiment of the present invention, the at least second function module 12 comprises a sealed feature allowing to disable inheritance of the at least second function module 12. Therein, the advantage achieved is to allow an easy restrictive use of the at least second function module 12.

In an embodiment of the present invention, the service is a virtual-typed service meaning that the at least derived second function module 12 must implement the at least service inherited from the parent first function module 10. In this way, it can be ensured that the first function module 10 needs not contain detailed information about an implementation manner. For example, the parent first function module 10 contains a service called heating as a virtual service and the derived second function module 12 contains the detailed information about how the service of heating is implemented, e.g. an gas or an oil heating.

In the following, the various possibilities or functions for adapting a function module according to the present invention compared with the general object-orientated approach (OO) are listed:

### 1. Function: Virtual function

### Usage for function module:

In a function module, virtual services could be implemented, which would allow a derived class to override and redefine the functionality of a service. Additionally, virtual could be used for equipment, such as a pump, where several different implementations could be used and by a derived module, the specific implementation could be described (see Interface).

### 2. Function: Abstraction (abstract class)

### Usage for function module:

An abstract function module can be a kind of a template that already defines all basic functions for the function module, but the services are only described by means of their signature. The derived function module has to implement the services (or just some of the services), before the function module can be used. The abstract function module cannot be directly used, but another function module must be derived from it. Still, abstract classes may provide several preimplemented methods.

### 3. Function: Protected

### Usage for function module:

Protected services can be used (can be overridden and/or called) only by derived function modules. This might be important when some smaller services for simple functionality are implemented, e.g., a redundancy switch procedure, which are not usable from outside a function module by the POL (= process orchestration layer). But the derived function module can use the service inside its own control code.

It should be further noted that an equipment or a device in a function module can also be made protected, would mean, the equipment can only be used in derived function modules, but not manually controlled in the POL.

### 4. Function: Private

Private service can be used to define functionalities for structuring the function module internally. No other function module or POL is allowed to access the private service. Private are basically all internal functions and variables of a function module. The novel feature is the enablement of state-based service control also for internal services in a function module. This provides the advantage to allow more fine-granular access to services by the module vendor just be changing a keyword.

### 5. Function: Public

### Usage for function module:

Public services and equipment are just what is implemented today. Every other function module or the POL is allowed to access public defined services and equipment.

### 6. Function: Interface

### Usage for function module:

Function module interfaces can be used to define the needed services to provide a certain functionality. That means, the function module interface only defines which services should be there and the signature of the services. A function module implementing an interface must adhere and implement exactly that interface. How the implementation is done is decided by the implementing function module. Furthermore, a function module can implement multiple interfaces, e.g., pumping and heating, allowing classification of function module "capabilities" and their standardization.

### 7. Function: Optional methods

### Usage for function module:

Services that are optionally defined in a function module interface or abstract function module, where the engineer can decide whether to implement those or not. It should be possible to define several of those, but also defined that at least one (or more) of them must be implemented. Choice is up to the user. Unused optional service from a function module interface of abstract function module do not exist in the derived function module, and thus cannot be used or derived any further.

### 8. Function: Optional arguments

### Usage for function module:

When the parameter of a service is not set during a service call, the default value is taken.

These parameters must be defined during function module engineering.

### 9. Function: Method overloading

### Usage for function module:

A function module can provide services with the same name, but with different procedure parameter (method arguments). Depending on which signature is called, the corresponding control logic is executed.

### 10. Function: Sealed classes

### Usage for function module:

Sealed function modules cannot be further inherited. Those are the leaves (e.g., no children) of the inheritance tree.

Generally, it should noted that some of the features listed above are not restricted to a derived child second function module, but may also applied to a parent first function module, if it makes sense from a technical point of view.

Besides that, different functions to be implemented in function modules, known concepts from (software) product line management can be used. For example, derived function modules can either enforce the usage of optional functionality or nested modules from its parent function modules, or completely disable these functions - or, of course, keep them optional (three-value logic of feature management).

In further embodiments of the present invention, a definition of public, private, protected process equipment can be used. That means that similar functionalities like for the services can be used. Examples here are parts of an equipment which are completely hidden from the operator or need to be made transparent, e.g., due to a service agreement. For example, same function module can be sold to customer A as a black-box allowing no customer-maintenance, while customer B can get same function module where parts of equipment are defined public allowing their dedicated monitoring (e.g., using OPCUA) and maintenance/replacement.

In further embodiments of the present invention, the inheritance mechanisms for function modules can not only be used in a "binary" way, i.e., by enabling/disabling services etc. but also to restrict the modeling space of inherited function modules, e.g., by narrowing the range of possible variables like ranges of service parameters or setting some default parameters for services or equipment.

In the following, examples for the envisioned implementation of selected functions in a function module will be given in the following with corresponding figures.

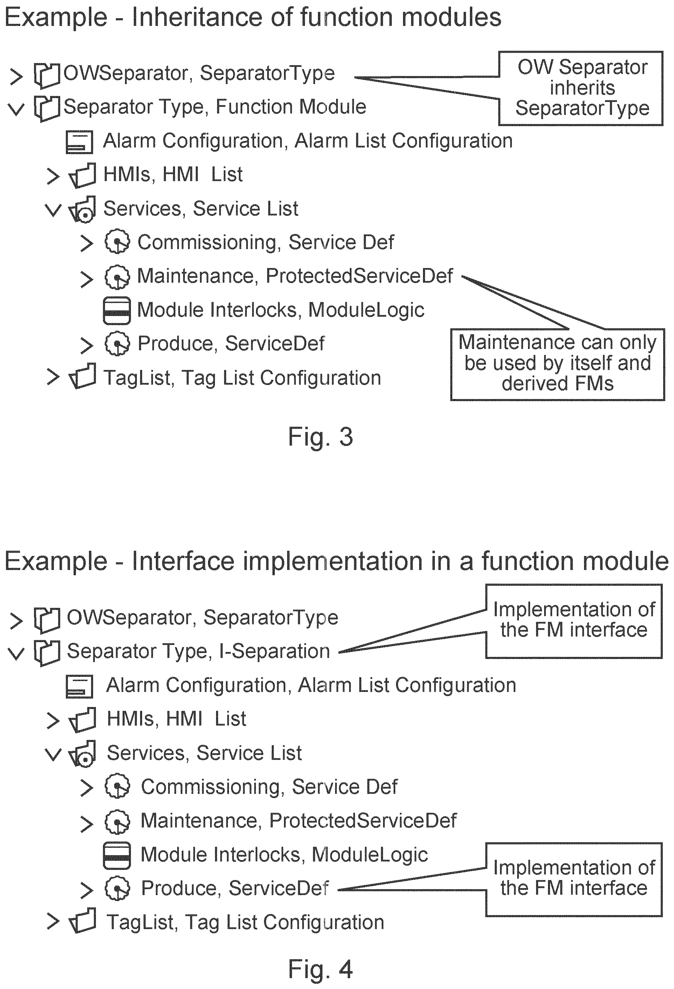

Fig. 3 illustrates a schematic example for depicting inheritance of a function module. In the present invention, inheritance can be used to derive functionality from an already developed function module. The functionality - the services - can be inherited and used in the derived FM. In the example of Fig. 3 a function module "SeparatorType" is shown, which is inherited by the function module "OWSeparator". The service "Maintenance" is defined as protected and is therefore only usable in the function module "SeparatorType" and the derived function modules, here "OWSeparator".

The function module "OWSeparator" can reuse the services from "SeparatorType" and further specify the functionality for the desired purpose. Additionally, the HMI, alarm list, tags and tag list is derived from the inherited module. These functions can be enhanced, as well, but not be reduced, since this is process equipment that must be present to fulfill the functions of the function module. HMI can be changed (symbols can be rearranged) for the derived module when adaptation is needed.

Fig. 4 illustrates a schematic interface implementation in a function module. Referring to the aforementioned example, for the separator, also a function module interface can be defined. The function module interface specifies all required services, as well as their state-machine and the needed parameters. It does not define a complete function module. Referring to the example of Fig. 4, the "SeparatorType" implements the interface and therefore the service "Produce" must be implemented, as well.

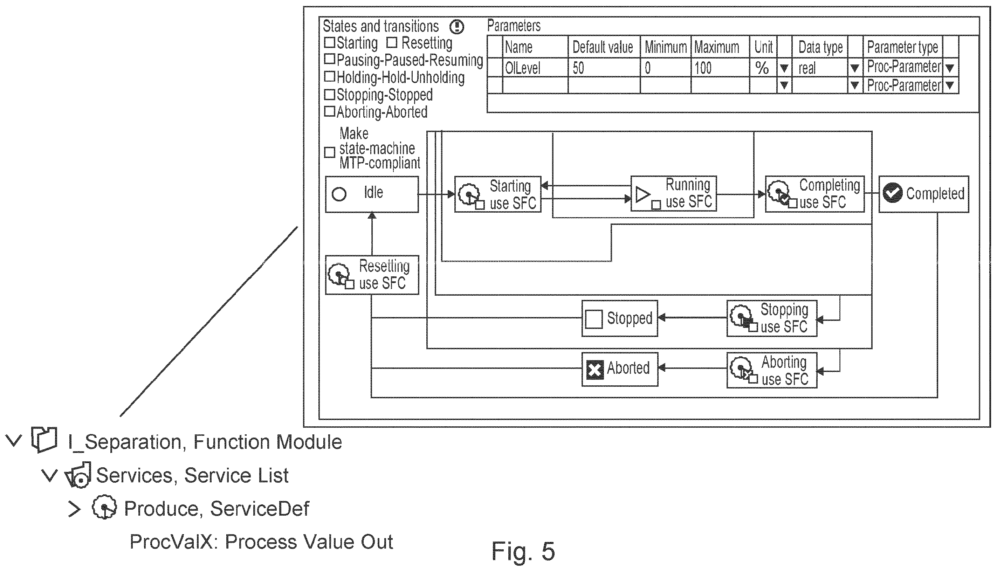

In this context, Fig. 5 shows an example for the separator function module interface. The interface defines a service "Produce" that must be implemented in every function module using it. Additionally, the state-machine must be implemented in exactly the way it is defined in the interface and the service must provide exactly one parameter called "OilLevel" and one process value output "ProcValX".

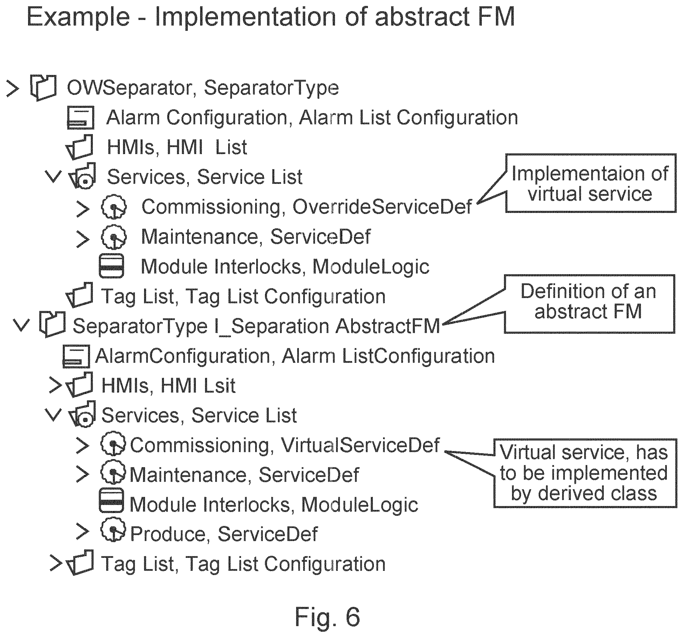

Fig. 6 illustrates a schematic implementation of an abstract function module which is a further possibility to implement a service. The example of Fig. 6 also includes a definition of a virtual service, which must be implemented in the derived function module. The Fig. 6 shows the "SeparatorType" as abstract FM, and a virtual service "Commissioning". The service commissioning must be implemented by the derived function module "OWSeparator". The function module "SeparatorType" cannot be used for plant engineering, instead the derived function module "OWSeparator" has to be used.

It should be further noted that in abstract function modules, a placeholder for an equipment or a device could be defined, as well. The derived function module must then specify the functionality. For example: A heat exchanger is needed, but the exact type of the heat exchanger is not defined in the parent function module but is defined in the derived function module.

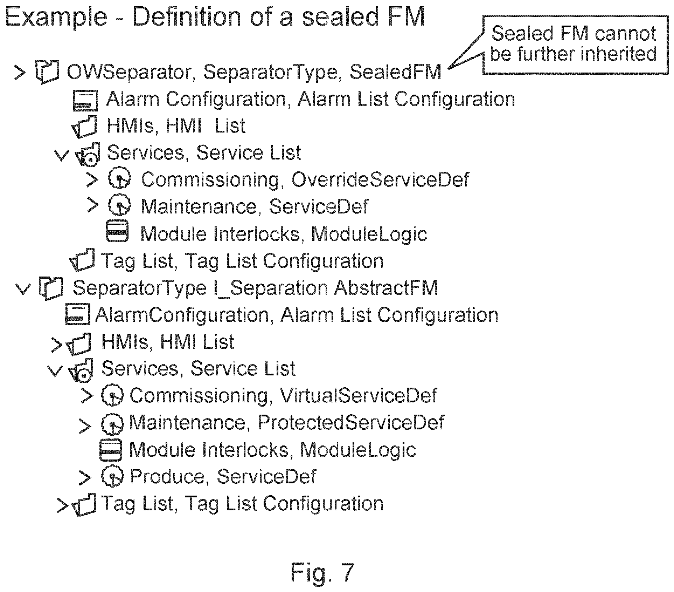

Fig. 7 illustrates a schematic implementation of a sealed function module. A sealed function module means that a further inheritance of said function module is disabled and that this function module is the last level of inheritance. In Fig. 7, the function module "OWSeparator" is defined sealed, which means no other (child) function module can be derived from it.

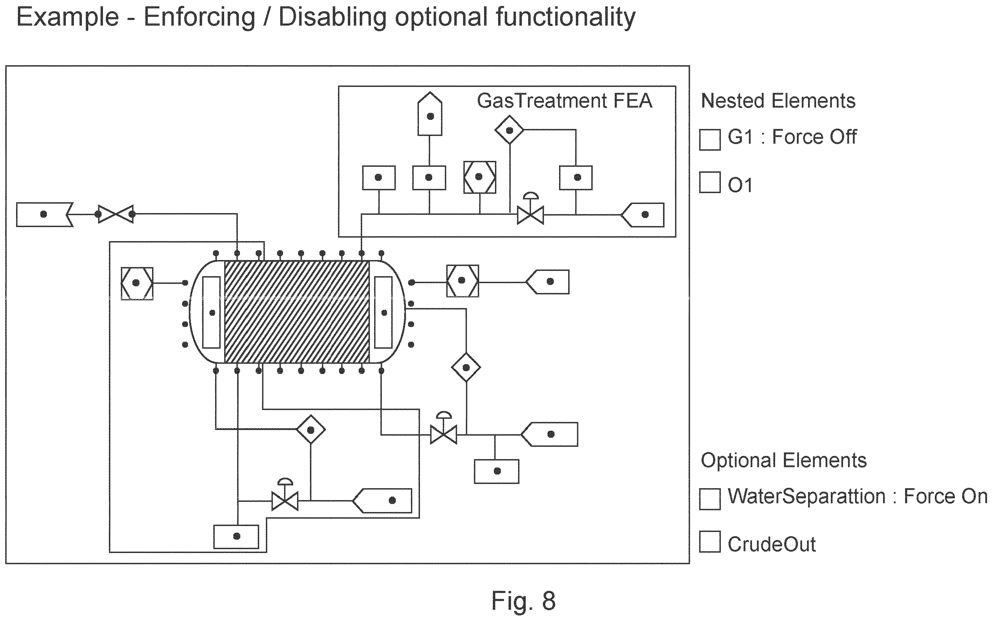

Fig. 8 illustrates a schematic implementat of enforcing and disabling functions of a function module. With a derived module, the optional functionality, and the nested modules and nested function modules can be enforced. This means, the engineer cannot disable the enforced functionality anymore, also, not in derived function modules.

For the example used herein in Fig. 8, the function module "OWSeparator" shall be used to separate oil and water. That means, the water treatment that is defined as option functionality in the "SeparatorType", is enforced by the "OWSeparator". A possible implementation is shown in Figure 8. It is noted that feature variation is orthogonal to the implementation. This means that enforcing "WaterSeparation" may enable inclusion of a specific interface/virtual service or a concrete service implementation.

Further, Fig. 5 shows an example, how with a derived function module, the optional functionality, and the nested modules and nested function modules can be disabled. That means, the engineer using the derived function module cannot enable the functionality anymore. Also, not in derived function modules. For the example used here, the "OWSeparator" shall be used to separate oil and water. That means, the gas treatment that is a nested function module in the function module "SeparatorType", is disabled by the "OW Separator".

In summary and as described before in detail, the concept of the present invention provides a method for a full object-oriented concept for handling function modules in the following way:
- Possibility to inherit from a completed function module
- Possibility to inherit protected services and equipment that can be overridden in
- derived function module
- Possibility to define public members (services and equipment)

The method also allows function module interfaces and definition of abstract function module in the following way:
- Possibility to define, using a function module interface, functionality that must be implemented (Possibility to enforce implementation of certain interfaces (as mix of abstract classes and interface definitions) to provide a machine-readable requirement for function modules functionality)
- Possibility to define abstract function modules, where only derived function modules, can be used and must implement the virtual services
- Possibility to implement multiple well-defined interfaces for a single function module to allow classification and semantic, e.g., based on the definition of basic functions, of function modules and re-use their functional aspects on a higher granularity level than single services

The method of the present invention further allows enforcing and disabling inherited optional functionality and nested function modules and MTP modules:
- Possibility to enforce optional functionality from an inherited function module
- Possibility to enforce the usage of nested function modules and MTP-modules
- Possibility to disable inherited optional functionality
- Possibility to disable the usage of nested function modules and MTP-modules

### REFERENCE SIGNS

- 10: First function module (Parent)
- 12: Second function module (Child)

- 100: Method
- 101: step of providing a first function module
- 103: step of generating at least a second function module

## Claims

1. A method (100) of providing a software configuration for a modular plant, the method comprising:
- providing (101) a first function module (10) as a parent object, wherein the first function module comprises a function information of the first function module (10);
- generating (103) at least a second function module (10), wherein the second function module (12) is a derived child object of the first function module (12) that inherits the function information of the first function module (10),
wherein the function information of the first function module (10) comprises at least one service defining at least a basic function of the first function module (10) that is inherited by the derived at least second function module (12), wherein the first function module (10) further implements at least an interface information only defining said service that must be implemented by the at least derived second function module (12).

2. The method according to claim 1, wherein the at least one service comprises a signature which comprises at least a characteristic property of said service.

3. The method according to claims 1 or 2, wherein the function information of the first function module (10) further comprises at least one device used to implement said defined service.

4. The method according to claim 1, wherein the function information in said derived second function module (12) comprises a protected feature that allows to adjust, whether a defined basic function of a service and / or a device from the derived second function module (12) can be used in a further instance of said derived second function module (12).

5. The method accoding to any of the proceeding claims 1 to 4, wherein the at least first function module (10) further comprises at least a conditional feature that allows activating/enforcing or disabling the usage of the device and / or service of the first function module (10) and / or the derived second function module (12).

6. The method accoding to any of the proceeding claims 1 to 4, wherein the service comprises at least one optional feature that is only described in the at least second function module (12).

7. The method accoding to claim 6, wherein the at least second function module (12) comprises a selection function allowing to enforce or disable the usage of the optional function of the service derived from the at least first function module (10).

8. The method according to any of the proceedings claims, wherein the at least second function module (12) comprises a sealed feature allowing to disable inheritance of the at least second function module (12).

9. The method according to claim 1, wherein the service is a virtual-typed service meaning that the at least derived second function module (12) must implement the at least service inherited from the parent first function module (10).

10. A computer comprising a processor configured to perform the method of any preceding claims 1-9.

11. A computer program product comprising instructions which, when the program is executed by a processor of a computer, cause the computer to perform the method of any of claims 1-9.

## Patentansprüche

1. Verfahren (100) zum Bereitstellen einer Software-Konfiguration für eine modulare Anlage, wobei das Verfahren umfasst:
- Bereitstellen (101) eines ersten Funktionsmoduls (10) als übergeordnetes Objekt, wobei das erste Funktionsmodul eine Funktionsinformation des ersten Funktionsmoduls (10) umfasst;
- Erzeugen (103) mindestens eines zweiten Funktionsmoduls (10), wobei das zweite Funktionsmodul (12) ein abgeleitetes untergeordnetes Objekt des ersten Funktionsmoduls (12) ist, das die Funktionsinformationen des ersten Funktionsmoduls (10) erbt,
wobei die Funktionsinformation des ersten Funktionsmoduls (10) mindestens einen Dienst umfasst, der mindestens eine Grundfunktion des ersten Funktionsmoduls (10) definiert, die von dem abgeleiteten mindestens zweiten Funktionsmodul (12) geerbt wird, wobei das erste Funktionsmodul (10) ferner mindestens eine Schnittstelleninformation implementiert, die nur den Dienst definiert, der von dem mindestens abgeleiteten zweiten Funktionsmodul (12) implementiert werden muss.

2. Verfahren nach Anspruch 1, wobei der mindestens eine Dienst eine Signatur umfasst, die mindestens eine charakteristische Eigenschaft des Dienstes umfasst.

3. Verfahren nach Anspruch 1 oder 2, wobei die Funktionsinformationen des ersten Funktionsmoduls (10) ferner mindestens ein Gerät umfassen, das zur Implementierung des definierten Dienstes verwendet wird.

4. Verfahren nach Anspruch 1, wobei die Funktionsinformationen in dem abgeleiteten zweiten Funktionsmodul (12) ein geschütztes Merkmal umfassen, das es ermöglicht, anzupassen, ob eine definierte Grundfunktion eines Dienstes und/oder eine Vorrichtung aus dem abgeleiteten zweiten Funktionsmodul (12) in einer weiteren Instanz des abgeleiteten zweiten Funktionsmoduls (12) verwendet werden kann.

5. Verfahren nach einem der vorstehenden Ansprüche 1 bis 4, wobei das mindestens erste Funktionsmodul (10) ferner mindestens ein bedingtes Merkmal umfasst, das es ermöglicht, die Verwendung der Vorrichtung und/oder des Dienstes des ersten Funktionsmoduls (10) und/oder des abgeleiteten zweiten Funktionsmoduls (12) zu aktivieren/durchzusetzen oder zu deaktivieren.

6. Verfahren nach einem der vorstehenden Ansprüche 1 bis 4, wobei der Dienst mindestens ein optionales Merkmal umfasst, das nur im mindestens zweiten Funktionsmodul (12) beschrieben ist.

7. Verfahren nach Anspruch 6, wobei das mindestens zweite Funktionsmodul (12) eine Auswahlfunktion umfasst, die es ermöglicht, die Verwendung der optionalen Funktion des Dienstes, der aus dem mindestens ersten Funktionsmodul (10) abgeleitet ist, zu erzwingen oder zu deaktivieren.

8. Verfahren nach einem der Verfahrensansprüche, wobei das mindestens zweite Funktionsmodul (12) eine versiegelte Funktion umfasst, die es ermöglicht, die Vererbung des mindestens zweiten Funktionsmoduls (12) zu deaktivieren.

9. Verfahren nach Anspruch 1, wobei der Dienst ein virtuell typisierter Dienst ist, was bedeutet, dass das mindestens abgeleitete zweite Funktionsmodul (12) den mindestens einen vom übergeordneten ersten Funktionsmodul (10) geerbten Dienst implementieren muss.

10. Computer mit einem Prozessor, der so konfiguriert ist, dass er das Verfahren gemäß einem der vorstehenden Ansprüche 1 bis 9 ausführt.

11. Computerprogrammprodukt, das Befehle umfasst, die, wenn das Programm von einem Prozessor eines Computers ausgeführt wird, den Computer veranlassen, das Verfahren nach einem der Ansprüche 1 bis 9 auszuführen.

## Revendications

1. Procédé (100) de fourniture d'une configuration logicielle pour une installation modulaire, le procédé comprenant les étapes suivantes :
- fournir (101) un premier module fonctionnel (10) en tant qu'objet parent, où le premier module fonctionnel comprend des informations fonctionnelles du premier module fonctionnel (10) ;
- générer (103) au moins un deuxième module fonctionnel (10), où le deuxième module fonctionnel (12) est un objet enfant dérivé du premier module fonctionnel (12) qui hérite des informations fonctionnelles du premier module fonctionnel (10),
dans lequel les informations fonctionnelles du premier module fonctionnel (10) comprennent au moins un service définissant au moins une fonction de base du premier module fonctionnel (10) qui est héritée par l'au moins deuxième module fonctionnel dérivé (12), le premier module fonctionnel (10) implémentant en outre au moins des informations d'interface définissant uniquement ledit service qui doit être mis en œuvre par l'au moins deuxième module fonctionnel dérivé (12).

2. Procédé selon la revendication 1, dans lequel l'au moins un service comprend une signature qui comprend au moins une propriété caractéristique dudit service.

3. Procédé selon la revendication 1 ou la revendication 2, dans lequel les informations fonctionnelles du premier module fonctionnel (10) comprennent en outre au moins un dispositif utilisé pour mettre en œuvre ledit service défini.

4. Procédé selon la revendication 1, dans lequel les informations fonctionnelles dans ledit deuxième module fonctionnel dérivé (12) comprennent une caractéristique protégée qui permet de régler si une fonction de base définie d'un service et/ou un dispositif du deuxième module fonctionnel dérivé (12) peuvent être utilisés dans une autre instance dudit deuxième module fonctionnel dérivé (12).

5. Procédé selon l'une quelconque des revendications précédentes 1 à 4, dans lequel l'au moins premier module fonctionnel (10) comprend en outre au moins une caractéristique conditionnelle qui permet d'activer/de forcer ou de désactiver l'utilisation du dispositif et/ou du service du premier module fonctionnel (10) et/ou du deuxième module fonctionnel dérivé (12).

6. Procédé selon l'une quelconque des revendications précédentes 1 à 4, dans lequel le service comprend au moins une caractéristique facultative qui n'est décrite que dans l'au moins un deuxième module fonctionnel (12).

7. Procédé selon la revendication 6, dans lequel l'au moins un deuxième module fonctionnel (12) comprend une fonction de sélection permettant de forcer ou de désactiver l'utilisation de la fonction facultative du service dérivée de l'au moins premier module fonctionnel (10).

8. Procédé selon l'une quelconque des revendications précédentes, dans lequel l'au moins un deuxième module fonctionnel (12) comprend une caractéristique scellée permettant de désactiver l'héritage de l'au moins un deuxième module fonctionnel (12).

9. Procédé selon la revendication 1, dans lequel le service est un service de type virtuel signifiant que l'au moins un deuxième module fonctionnel dérivé (12) doit implémenter l'au moins un service hérité du premier module fonctionnel parent (10).

10. Ordinateur comportant un processeur configuré pour réaliser le procédé selon l'une quelconque des revendications 1 à 9.

11. Produit de programme d'ordinateur comportant des instructions qui, lorsque le programme est exécuté par un processeur d'un ordinateur, amènent l'ordinateur à réaliser le procédé selon l'une quelconque des revendications 1 à 9.
